# EUROPÄISCHE PATENTSCHRIFT

(11) **EP 0 997 853 B1**
(45) Veröffentlichungstag und Bekanntmachung des Hinweises auf die Patenterteilung: **15.10.2003**
(21) Anmeldenummer: 99121614.4
(22) Anmeldetag: 29.10.1999
(51) Int. Cl.: G07F 7/10, G06K 19/073

(54) **Verfahren zum Schutz von Chipkarten vor missbräuchlicher Verwendung in Fremdgeräten**
Method for protecting chip cards against unlawful use in unrelated devices
Méthode de protection de cartes à puce contre l'utilisation frauduleuse dans des dispositifs non-associés

(30) Priorität: 30.10.1998 DE 19850308
(43) Veröffentlichungstag der Anmeldung: 03.05.2000
(73) Patentinhaber: T-Mobile Deutschland GmbH, 53227 Bonn (DE)
(72) Erfinder: Kröber, Markus, 53125 Bonn (DE); Sporn, Ulrich, Dr., 53227 Bonn (DE)
(74) Vertreter: Riebling, Peter, Dr.-Ing.

(56) Entgegenhaltungen:
- EP-A- 0 216 298
- EP-A- 0 301 740
- EP-A- 0 574 219
- EP-A- 0 707 290
- DE-A- 4 342 641
- DE-A- 19 532 660
- FR-A- 2 600 188

## Beschreibung

Die Erfindung betrifft ein Verfahren zum Schutz von Chipkarten vor missbräuchlicher Verwendung in Fremdgeräten nach dem Oberbegriff des Patentanspruchs 1.

Derartige Chipkarten werden z.B. in Mobiltelefonen als persönlicher Zugangsschlüssel zum Mobilfunknetz eingesetzt. Anhand dieser Chipkarte, die auch als Teilnehmeridentitätsmodul SIM bezeichnet wird, kann sich der Teilnehmer gegenüber dem Mobilfunknetz identifizieren. Verständlicherweise ist die normale, berechtigte Nutzung der Chipkarte in einem Endgerät (Mobiltelefon) erwünscht, die missbräuchliche Verwendung der Chipkarte in einem fremden Kartenleser, um z.B. den geheimen Schlüssel Ki auszuspionieren, muss sicher vermieden werden. Bei den auf der Chipkarte gespeicherten Daten handelt es sich teilweise um sehr empfindliche private Daten, geheime Schlüssel etc. Die ausspionierten Daten könnten dann z.B. dazu missbraucht werden, Duplikate der Chipkarte zu erzeugen, d.h. einen "Nachschlüssel" für die Nutzung der Dienste des rechtmässigen Kunden des Mobilfunknetzes.

DE 43 42 641 A offenbart ein Verfahren zur Authentifikation zwischen einem mobilen Datenträger (Schlüssel) und einer stationären Datenstation (Schloss). Dabei wird vor der erstmaligen Benutzung eine Zufallszahl und ein Geheimcode auf dem Datenträger und in Datenstation gespeichert. Der Geheimcode ist dabei dem Kunden (Kfz-Hersteller) bekannt, da nur mit seiner Kenntnis ein Schreiben des zugehörigen Speicherbereichs möglich ist. Bei der erstmaligen Benutzung wird der Datenträger anhand der Zufallszahl als neu erkannt und die Datenstation generiert daraufhin einen neuen Geheimcode und überträgt ihn auf den Datenträger. Der gleiche Geheimcode wird auch in der Datenstation hinterlegt.

Aus der EP-A-0 707 290 ist ein Verfahren bekannt, bei dem sich ein Gerät gegenüber einem Datenträger authentifiziert. Hierfür ist auf dem Gerät ein Authentifizierungscode gespeichert, der als Schlüssel für eine Ver- und Entschlüsselungsfunktion zur Authentifizierung des Geräts gegenüber dem Datenträger verwendet wird.

Ein Verfahren zur Zugangskontrolle zwischen einem Datenträger und einem Gerät ist in der FR-A-2 600 188 offenbart, wobei zwischen Datenträger und Gerät geheime Schlüssel ausgetauscht werden, die zur gegenseitigen Authentifizierung zwischen dem Datenträger und dem Gerät dienen.

Die EP-A-0 301 740 betrifft ein Verfahren zur Authentifizierung eines Mobilfunkgeräts gegenüber einer Chipkarte, wobei im Mobilfunkendgerät ein die Chipkarte kennzeichnender Authentifizierungscode gespeichert ist, der einen Betrieb des Mobilfunkgeräts nur mit dieser Chipkarte erlaubt.

Der vorliegenden Erfindung liegt die Aufgabe zugrunde, ein Verfahren zum Schutz von Chipkarten vor missbräuchlicher Verwendung in Fremdgeräten anzugeben, welches die Benutzung der Chipkarte sowie ein Ausspionieren der auf der Karte befindlichen Daten in benutzerfremden Geräten unterbindet.

Die Lösung der gestellten Aufgabe wird durch die kennzeichnenden Merkmale des Anspruchs 1 erreicht.

Grundgedanke der Erfindung ist es, in jedem Gerät einen Code, vorzugsweise einen vertraulichen oder geheimen Code, abzuspeichern, der entweder direkt als Authentikationscode oder indirekt als Schlüssel für eine Ver- und/oder Entschlüsselungsfunktion zur Authentikation des Gerätes gegenüber der Chipkarte verwendet wird, wobei die Chipkarte mit einer Erstbenutzerfunktion ausgestattet ist, durch welche bei der Erstbenutzung der Chipkarte der nicht geheime Code aus dem gerade verwendeten Gerät ausgelesen und als Referenzcode auf der Chipkarte abgelegt wird, womit die Chipkarte fest an das Gerät gebunden und nachfolgend nur zusammen mit diesem verwendbar ist.

Ein wesentlicher Vorteil des Verfahrens liegt darin, dass die Benutzung der Chipkarte sowie das Ausspionieren der auf der Karte befindlichen Daten in benutzerfremden Geräten auch dann nicht möglich ist, wenn der fremden, dritten Person bereits die persönliche Geheimzahl PIN der Chipkarte bekannt ist. Durch das vorgeschlagene Verfahren wird also ein Missbrauch der Chipkarte in fremden Geräten sicher verhindert.

Hierzu muss das Gerät, welches z.B. ein Mobiltelefon, ein Chipkartenleser oder ähnliches sein kann, sich als berechtigter Benutzer gegenüber der Karte ausweisen, bevor der Zugriff auf die Daten der Chipkarte erlaubt wird. Dies ist nur möglich, wenn das Gerät der Chipkarte ein individuelles Merkmal in Form des vorzugsweise geheimen Codes zur Verfügung stellt und die Chipkarte anhand dieses Merkmals das Gerät eindeutig identifizieren kann. Es erfolgt also eine Authentifikation zwischen Gerät und Chipkarte. Durch das vorgeschlagene Verfahren ist die Nutzung der Chipkarte ausschliesslich an das bestimmte Gerät gebunden.

Vorteilhafte Ausgestaltungen und Weiterbildungen der Erfindung sind Gegenstand der abhängigen Patentansprüche.

Zum Beispiel ist in einer bevorzugten Ausgestaltung der Erfindung vorgesehen, dass der Code direkt durch den Hersteller des Gerätes im Gerät gespeichert wird. Dabei könnte vorteilhaft die eindeutige internationale Geräte- oder Seriennummer des Gerätes als Code verwendet werden. Diese Seriennummer wird einmalig für jedes Gerät vergeben.

In einer weiteren Ausführungsform kann auch vorgesehen sein, dass der Code im Gerät und/oder auf der Chipkarte durch den Benutzer selbst eingespeichert wird. Hierzu kann sich der Benutzer eine entsprechende Geheimzahl ausdenken, die er auf dem Gerät und auf der Chipkarte abspeichert.

In einer anderen Ausführungsform ist vorgesehen, dass der Code durch ein spezielles Schlüsselgenerierungsverfahren zwischen Chipkarte und Gerät generiert und im Gerät und auf der Chipkarte gespeichert wird. Dazu kann auf der Chipkarte z.B. ein spezielles Programm gespeichert sein, welches nach Einstecken der Chipkarte in das Gerät oder Eingabe eines entsprechenden Befehls aktiviert wird. Dieses Programm generiert dann mit geeigneten Algorithmen den Code und speichert diesen auf dem Gerät sowie auf der Chipkarte ab.

Im einfachsten Fall kann die Authentikation des Gerätes gegenüber der Chipkarte dadurch erfolgen, dass das Gerät die Nutzung der Karte akzeptiert bzw. nicht akzeptiert. Der Nutzer sieht dann sofort, ob dieses Gerät für die Nutzung mit der Chipkarte freigegeben ist oder nicht. Evtl. kann dann die Freischaltung des Geräts durch Eingabe einer "Freischalte"-PIN erfolgen.

Eine andere Möglichkeit besteht darin, dass die Authentikation des Gerätes gegenüber der Chipkarte mittels eines durch die Chipkarte initiierten Challenge-Response-Verfahrens erfolgt. Ist die Authentikation nicht erfolgreich, also die Nutzung der Chipkarte durch das Gerät nicht zulässig, so erfolgt ein Sperren des Zugriffs auf die Daten und/oder Funktionen.

Vorzugsweise ist die Nutzung der Chipkarte fest an ein bestimmtes Gerät gebunden, sobald sich das Gerät erstmalig bei der Chipkarte authentifiziert oder der Code sowohl auf dem Gerät als auch auf der Chipkarte gespeichert wurde.

Um sicherzustellen, dass das vorgeschlagene Verfahren nicht unterlaufen werden kann, ist ein Abspeichern, Ändern und Löschen des Codes auf der Chipkarte und/oder im Gerät nur durch eine entsprechende Freischaltfunktion möglich. Diese Freischaltfunktion kann wiederum über eine entsprechende Geheimzahl PIN gesichert werden, die nicht mit der Zugangs-PIN identisch ist.

Eine vorteilhafte Anwendung des Verfahrens ergibt sich im Bereich Mobilfunk, d.h. unter Verwendung eines Mobilfunkendgerätes und eines Teilnehmerindentifikationsmoduls SIM.

Mobilfunkendgeräte werden herstellerseitig mit einer international eindeutigen Seriennummer (IMEI) ausgestattet, die abrufbar ist. Die erfindungsgemäss vorbereitete Chipkarte verfügt nun über eine spezielle Funktion, welche die Seriennummer IMEI vom Gerät abruft und mit einer intern gespeicherten Referenz-Seriennummer vergleicht. Bei Übereinstimmung der Seriennummer des Gerätes mit der Referenz-Seriennummer auf der Chipkarte erlaubt die Chipkarte den weiteren Zugriff auf deren Daten und/oder Funktionen. Die Chipkarte ist mit einer sogenannten Erstbenutzerfunktion ausgestattet sein, durch welche bei der Erstbenutzung der Chipkarte die Seriennummer des gerade verwendeten Gerätes ausgelesen wird und als Referenz-Seriennummer auf der Chipkarte abgelegt wird. Damit ist die Chipkarte an das zuerst benutzte Endgerät gebunden und kann nur zusammen mit diesem verwendet werden. Natürlich muss vorgesehen sein, dass der rechtmässige Benutzer sein Endgerät wechseln kann, d.h. die Chipkarte muss über eine entsprechende Freischaltfunktion verfügen, die ein Abspeichern, Ändern oder Löschen des Codes jederzeit ermöglicht. Diese Freischaltfunktion muss jedoch über eine Geheimzahl gesichert sein, die nur dem rechtmässigen Benutzer bekannt ist. Bei Erstbenutzung der Karte ist deshalb vorgesehen, dass der Benutzer eine entsprechende Geheimzahl auswählt.

## Patentansprüche

1. Verfahren zum Schutz von Chipkarten vor mißbräuchlicher Verwendung in Fremdgeräten, wobei in jedem Gerät ein nicht geheimer Code gespeichert ist/wird, der entweder direkt als Authentikationscode oder indirekt als Schlüssel für eine Ver- und/oder Entschlüsselungsfunktion zur Authentikation des Geräts gegenüber der Chipkarte verwendet wird,
**dadurch gekennzeichnet,**
**dass** die Chipkarte mit einer Erstbenutzerfunktion ausgestattet ist, durch welche bei der Erstbenutzung der Chipkarte der nicht geheime Code aus dem gerade verwendeten Gerät ausgelesen und als Referenzcode auf der Chipkarte abgelegt wird, womit die Chipkarte fest an das Gerät gebunden und nachfolgend nur zusammen mit diesem verwendbar ist.

2. Verfahren nach Anspruch 1, **dadurch gekennzeichnet, dass** der Code im Gerät durch den Hersteller gespeichert wird.

3. Verfahren nach Anspruch 1 oder 2, **dadurch gekennzeichnet, dass** als Code die eindeutige internationale Geräte- oder Seriennummer des Gerätes verwendet wird.

4. Verfahren nach einem der Ansprüche 1 oder 3, **dadurch gekennzeichnet, dass** der Code im Gerät und/oder der Chipkarte durch den Benutzer gespeichert wird.

5. Verfahren nach Anspruch 1, **dadurch gekennzeichnet, dass** der Code durch ein Schlüsselgenerierungsverfahren zwischen Chipkarte und Gerät generiert und im Gerät und auf der Chipkarte gespeichert wird.

6. Verfahren nach einem der Ansprüche 1 bis 5, **dadurch gekennzeichnet, dass** die Authentikation des Gerätes gegenüber der Chipkarte durch Anzeige einer Nutzungserlaubnis erfolgt.

7. Verfahren nach einem der Ansprüche 1 bis 6, **dadurch gekennzeichnet, dass** die Authentikation des Gerätes gegenüber der Chipkarte mittels eines durch die Chipkarte initiierten Challenge-Response-Verfahren erfolgt.

8. Verfahren nach einem der Ansprüche 1 bis 7, **dadurch gekennzeichnet, dass** im Falle keiner erfolgreichen Authentifikation des Geräts der Zugriff auf die Daten und/oder Funktionen der Chipkarte gesperrt wird.

9. Verfahren nach einem der Ansprüche 1 bis 8, **dadurch gekennzeichnet, dass** ein Abspeichern, Ändern und Löschen des Codes auf der Chipkarte und/oder im Gerät nur durch eine entsprechende Freischaltfunktion erfolgen kann.

## Claims

1. Method for protecting chip cards from improper use in different devices, a non-secret code being stored in each device, which is used either directly as an authentication code or indirectly as a cipher for a coding and/or decoding function for authentication of the device with respect to the chip card, **characterised in that** the chip card is equipped with a first user function, by which upon first use of the chip card the non-secret code is read out from the device just used and is stored as a reference code on the chip card, whereby the chip card is permanently bound to the device and subsequently can only be used together therewith.

2. Method according to claim 1, **characterised in that** the code is stored in the device by the producer.

3. Method according to claim 1 or 2, **characterised in that** the distinct international device or serial number of the device is used as the code.

4. Method according to any one of claims 1 or 3, **characterised in that** the code is stored in the device and/or the chip card by the user.

5. Method according to claim 1, **characterised in that** the code is generated by a code generating method between the chip card and device and is stored in the device and on the chip card.

6. Method according to any one of claims 1 to 5, **characterised in that** the device is authenticated with respect to the chip card by the display of a permission to use.

7. Method according to any one of claims 1 to 6, **characterised in that** the device is authenticated with respect to the chip card by means of a challenge-response method initiated by the chip card.

8. Method according to any one of claims 1 to 7, **characterised in that** in the event of no successful authentication of the device, access to the data and/or functions of the chip card is barred.

9. Method according to any one of claims 1 to 8, **characterised in that** storing, changing and deletion of the code on the chip card and/or in the device can only be made by a corresponding clearing function.

## Revendications

1. Procédé de protection de cartes à puce contre l'utilisation frauduleuse dans des appareils étrangers, selon lequel un code non secret est mémorisé dans chaque appareil, lequel code est utilisé directement comme code d'authentification ou indirectement comme clé pour une fonction de codage et/ou de décodage pour authentifier l'appareil par rapport à la carte à puce,
**caractérisé en ce que** la carte à puce est équipée d'une fonction de premier utilisateur grâce à laquelle lors de la première utilisation de la carte à puce, le code non secret est lu dans l'appareil qui est justement utilisé et est stocké comme code de référence sur la carte à puce, moyennant quoi la carte à puce est reliée définitivement à l'appareil et ne peut être utilisé par la suite qu'avec cet appareil.

2. Procédé selon la revendication 1, **caractérisé en ce que** le code est mémorisé dans l'appareil par le fabricant.

3. Procédé selon la revendication 1 ou 2, **caractérisé en ce qu'**on utilise comme code le numéro d'appareil ou de série international univoque de l'appareil.

4. Procédé selon la revendication 1 ou 3, **caractérisé en ce que** le code est mémorisé dans l'appareil et/ou dans la carte à puce par l'utilisateur.

5. Procédé selon la revendication 1, **caractérisé en ce que** le code est généré par un procédé de production de clé entre la carte à puce et l'appareil, et est mémorisé dans l'appareil et sur la carte à puce.

6. Procédé selon l'une des revendications 1 à 5, **caractérisé en ce que** l'authentification de l'appareil par rapport à la carte à puce se fait grâce à l'affichage d'une autorisation d'utilisation.

7. Procédé selon l'une des revendications 1 à 6, **caractérisé en ce que** l'authentification de l'appareil par rapport à la carte à puce se fait à l'aide d'un procédé à réaction lancé par la carte à puce.

8. Procédé selon l'une des revendications 1 à 7, **caractérisé en ce que**, en l'absence d'authentification réussie de l'appareil, l'accès aux données et/ou aux fonctions de la carte à puce est bloqué.

9. Procédé selon l'une des revendications 1 à 8, **caractérisé en ce qu'**une mise en mémoire, une modification et un effacement du code sur la carte à puce et/ou dans l'appareil ne peuvent se faire que grâce à une fonction de libération correspondante.
